# EUROPÄISCHE PATENTSCHRIFT

(11) **EP 1 210 811 B1**
(45) Veröffentlichungstag und Bekanntmachung des Hinweises auf die Patenterteilung: **02.08.2006**
(21) Anmeldenummer: 00940126.6
(22) Anmeldetag: 17.04.2000
(51) Int. Cl.: H04M 1/247

(54) **EINGABEELEMENT FÜR EIN TELEFON**
INPUT ELEMENT FOR A TELEPHONE
ELEMENT D'ENTREE POUR TELEPHONE

(30) Priorität: 06.09.1999 DE 19942448
(43) Veröffentlichungstag der Anmeldung: 05.06.2002
(73) Patentinhaber: SIEMENS AKTIENGESELLSCHAFT, 80333 München (DE)
(72) Erfinder: HOLZ AUF DER HEIDE, Bernd, D-81549 München (DE); ANFT, Michael, D-86492 Heinrichshofen (DE)
(86) Internationale Anmeldenummer: PCT/DE2000/001202
(87) Internationale Veröffentlichungsnummer: WO 2001/019057

(56) Entgegenhaltungen:
- EP-A- 0 797 336
- EP-A- 1 028 570
- WO-A-97/16912

## Beschreibung

Die Erfindung betrifft ein Eingabe- oder Wählelement sowie eine Eingabevorrichtung für ein Telefon, insbesondere für ein mobiles Telefon.

Wähl- oder Bedienelemente sowohl für ein Tastentelefon als auch ein mobiles Telefon sind bekannt. Üblicherweise erfolgt die Eingabe bzw. Selektion von Menüpunkten und/oder Ziffern über einen 12er-Tastenblock und weiterer Tasten zum Anwählen weiterer Funktionen. Häufig erfolgt die Anwahl der weiteren Funktionen durch sequentielles Drücken einer Taste oder eines Tastenpaares, so beispielsweise sequentielles Hoch- oder Abwärtszählen, sowie eine Auswahl per Cursortasten.

Eine weitere bekannte Form der Bedienung eines Mobiltelefons erfolgt über ein sogenanntes Jog-Dial, wie dies beispielsweise bei neueren Mobiltelefonen der Firma Sony realisiert ist und in der Druckschrift EP-A-0 797 336 beschrieben ist. Dabei ist das Jog-Dial ein im Mobiltelefon angeordnetes Stellrad, das eine Drehfunktion und eine Druckfunktion aufweist. Beispielsweise kann durch Drehen des Jog-Dial-Stellrad durch ein Menü oder die Ziffern 0 - 9 gescrollt werden, wobei ein Druck in radialer Richtung auf das Rädchen beispielsweise eine Bestätigungs- oder Auswahlfunktion der durch die Drehbewegung angewählten Funktion oder Ziffer realisiert. Nachteilig bei dieser Lösung ist, daß diese Form der Eingabe insbesondere bei längeren Telefonnummern zu lange dauert und zu einer vergleichsweise hohen kognitiven und motorischen Belastung führt.

Für miniaturisierte Geräte werden auch interaktive Displays vorgeschlagen. Im Dokument WO97/16912 wird eine Armbanduhr mit einem derartigen Display beschrieben. Nachteilig ist daran, daß zum Aktivieren von einzelnen, auf dem Display dargestellten Punkten sinnvollerweise ein zusätzlicher Stift verwendet wird (vgl. Seite 2, Zeilen 10ff.), um beispielsweise die Größe der Menüpunkte klein halten zu können.

Ferner gibt es noch als grundsätzliche weitere Möglichkeit der Dateneingabe die Eingabe bzw. Steuerung per Spracheingabe. Für miniaturisierte Geräte hat diese Form noch keine Marktreife erlangt, beziehungsweise ist technisch und finanziell derzeit noch zu aufwendig.

Allgemein wird im Zuge der weiteren Miniaturisierung die für das User-Interface verfügbare Fläche der Informations- und Kommunikationsendgeräte wie beispielsweise GSM- und DECT-Telefone immer kleiner, so daß der traditionelle 12er-Tastenblock auf zukünftigen Geräten keinen Platz mehr finden wird.

Der Erfindung liegt daher die Aufgabe zugrunde, ein Eingabeelement sowie eine Eingabevorrichtung zu schaffen, das einen verminderten Platzbedarf hat und die Nachteile des Jog-Dial vermeidet.

Die Aufgabe wird durch die Merkmale des Eingabeelements nach Anspruchs 1 sowie der Eingabevorrichtung nach Anspruch 10 gelöst. Bevorzugte Ausgestaltungen der Erfindung sind Gegenstand der Unteransprüche.

Das erfindungsgemäße Eingabeelement weist ein Stellrad auf, wobei das Stellrad eine Drehfunktion in zwei Richtungen, d.h. vorwärts und rückwärts, und zwei Tastenfunktionen umfaßt. Die Bewegungsrichtungen zu Erzeugung der Tastenfunktionen sind in einer Ebene senkrecht zur Drehebene angeordnet und einander entgegengesetzt. Das Stellrad kann aus der Ebene der Drehbewegung heraus nach jeder Seite durch die Ausübung eines entsprechenden Drucks gekippt werden, so daß auch von einer Druck- oder Kippfunktion gesprochen werden kann. Durch eine entsprechende Vorrichtung wird durch das Verkippen ein Signal generiert, so daß zwei mögliche Signale zur Verfügung stehen.

Die Visualisierung bzw. Rückmeldung der Selektion über kreisförmig angebrachte Elemente, beispielsweise beleuchtete Ziffern, analog zur Drehbewegung des Stellrades, besitzt eine hohe Selbsterklärungsfähigkeit und unterstützt die Ausbildung sensomotorischer Fähigkeiten beim Benutzer, was die Gerätebenutzung insgesamt kognitiv erleichtert und motorisch beschleunigt.

Vorzugsweise ist die Bewegung des Stellrads frei rotierend oder mit einem Anschlag versehen, wobei die Rotationsbewegung gerastert oder ungerastert sein kann. Diese weiteren Merkmale richten sich jeweils nach der entsprechenden Anwendung.

Ferner kann das erfindungsgemäße ein Stellrad umfassende Eingabeelement mit einer Anzeige zu einer Eingabevorrichtung gekoppelt sein, die zur Drehbewegung des Stellrads kognitiv kompatibel ist. Vorzugsweise handelt es sich dabei um eine großflächige, insbesondere kreisförmige Anzeigefläche, auf der die entsprechenden Menüs, Untermenüs, Menüpunkte oder Ziffern im wesentlichen auf einem Kreis angeordnet sind, so daß eine direkte Zuordnung zwischen der Anzeige und dem Stellrad für den Benutzer gegeben ist. Die Kombination der Drehbewegung des Stellrades und der darauf abgestimmten Anzeige erleichtert und beschleunigt den Auswahl- bzw. Eingabevorgang und reduziert Wahrnehmungsfehler.

Beispielsweise kann die Übernahme des selektierten Eintrag bzw. der selektierten Ziffer, die jeweils auf der Anzeige dargestellt sind, durch Druck auf eine Seite des Stellrades quer zur Drehrichtung erfolgen , d.h. mit einer ersten Tastenfunktion. Durch Druck auf die andere Seite des Stellrades quer zur Drehrichtung kann eine weitere Funktion, beispielsweise das Verlassen eines Menüs (ESC) oder das Löschen eines Zeichens (Backspace) ausgelöste werden, d.h. mit einer zweiten Tastenfunktion.

### Die Vorteile der erfindungsgemäßen Lösung sind wie folgt:

Reduktion des Platzbedarfs gegenüber traditionellen Tastenlösungen wie beispielsweise dem 12er-Zifferntastenblock, Reduktion der Wahrscheinlichkeit von Fehlbedienungen, wie dies bei einer Stellradlösung mit einer Drückfunktion in Drehrichtung häufig vorkommt, da durch das Drehen des Stellrades auch immer ein Druck in axialer Richtung des Stellrades ausgeübt wird, der u.U. die Tastenfunktion auslöst. Durch die vollständige Entkopplung der Drehfunktionen von den beiden Druck- bzw. Tastenfunktionen wird einem versehentlichen Auslösen der Tastenfunktion vorgebeugt. Ferner ist die Anzeige der aktuellen Selektion durch die kreisförmige Anordnung prägnanter und unverwechselbarer als bei bekannten Lösungen.

Es steht im Vergleich mit herkömmlichen Stellradlösungen eine weitere Tastenfunktion zur Verfügung, wodurch gängige Dialogführungen, beispielsweise "Cursor up/down" oder "OK" und "Escape", ohne die Anordnung einer schwer zu bedienenden weiteren Taste oder umständlicher Hilfskonstruktion, beispielsweise "Escape" als dargestellter Menüpunkt, realisiert werden können, wodurch die erfindungsgemäße Lösung eine Bedienungsführung mit deutlich erhöhtem Komfort ermöglicht. Die erfindungsgemäße Eingabevorrichtung integriert daher alle für eine komfortable Benutzerführung benötigten Elemente in einem Eingabeelement.

Bevorzugte Ausführungsformen der Erfindung werden nachfolgend anhand der Zeichnungen erläutert.
Fig. 1 zeigt eine Prinzipdarstellung des erfindungsgemäßen Eingabeelements,
Fig. 2 zeigt eine Detailansicht einer möglichen Lagerung des Stellrades des Eingabeelements der Fig. 1,
Fig. 3 zeigt die Anordnung eines Eingabeelements in einem runden Gehäuse,
Fig. 4 zeigt eine Draufsicht auf das eingebaute Eingabeelement der Fig. 3,
Fig. 5 zeigt eine erste Ausführungsform eines Mobiltelefons mit "analoger" Anzeige,
Fig. 6 zeigt eine zweite Ausführungsform eines Mobiltelefons mit "digitaler" Anzeige,
Fig. 7 zeigt eine dritte Ausführungsform eines Mobiltelefons mit großflächiger Anzeige, und
Fig. 8 zeigt eine weitere Möglichkeit der Anordnung des Eingabeelements in einem Mobiltelefon.

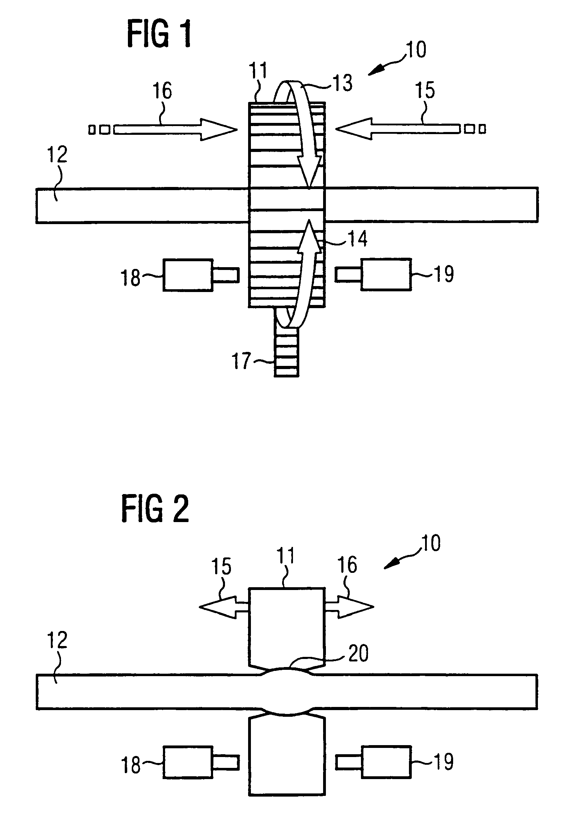

Fig. 1 zeigt ein erfindungsgemäßes Eingabeelement, das ein als Eingabemittel dienendes Stellrad 11 aufweist. Vorzugsweise ist das Stellrad 11 mit einer Riffelung versehen. Das Stellrad ist auf einer Achse 12 gelagert, und ist in zwei zueinander entgegengesetzte Richtungen 13 und 14 drehbar. Ferner ist das Stellrad 11 in eine zur Ebene der Drehbewegung im wesentlichen senkrecht stehende Ebene kippbar. Mit anderen Worten, das Stellrad 11 kann in die entgegengesetzten Richtungen 15 und 16 bewegt, d.h. durch Druckausübung versetzt oder gekippt werden. Zur Bestimmung der Drehbewegung ist ein Abnehmer oder Sensor 17 vorgesehen. Dieser Abnehmer für das Maß und die Richtung der Drehbewegung kann durch ein weiteres Stellrad gebildet werden. Andere Sensoren, die auf elektrischen und/oder optischen Verfahren beruhen, sind einsetzbar. Zur Ermittlung der Druckbewegung oder Verkippung des Stellrads sind beiderseitig des Stellrads 11 jeweils Sensoren 18 und 19 angeordnet. Diese Sensoren können beispielsweise Tastschalter sein. Andere Sensoren die auf elektrischen und/oder optischen Verfahren beruhen, sind ebenso einsetzbar.

Fig. 2 zeigt einen Querschnitt durch das Eingabeelement. Um die beiden Tastenfunktionen des Eingabeelements realisieren zu können, ist das Stellrad 11 auf der Achse 12 mittel eines Kugelgelenks oder Kugellagers 20 schwenkbar gelagert. Beispielsweise kann das Kugelgelenk 20 durch eine im wesentlichen kugelförmige Ausgestaltung der Achse 12 erreicht werden. Durch nach außen gerichtete Abschrägungen eines Teils der Innenfläche der Achsenbohrung des Stellrads 11 kann der maximale Kippwinkel festgelegt werden. Ferner sind ebenfalls die Richtungen der Kipp- oder Druckbewegung 15 und 16 sowie die Kippsensoren 18 und 19 eingezeichnet.

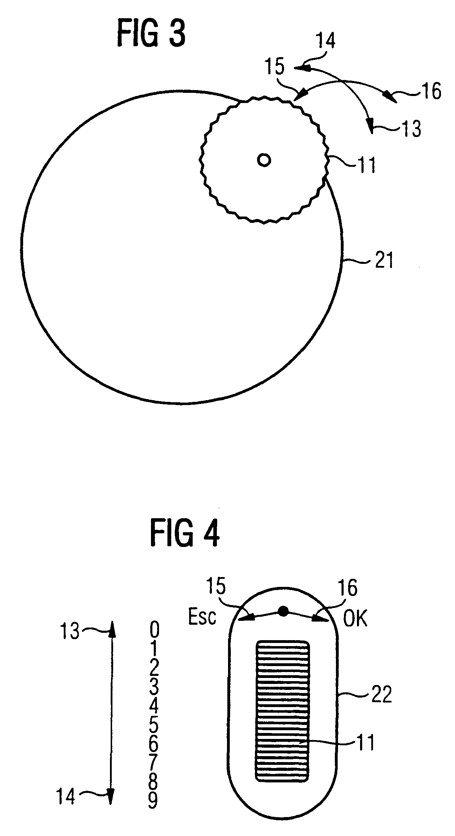

Fig. 3 zeigt das Schema des Zusammenwirkens des Stellrads 11, das in vier Richtungen 13, 14, 15, 16 beweglich ist, mit einer kreisförmigen Anzeigefläche eines kreisförmigen Mobiltelefons 21.

Fig. 4 zeigt eine Draufsicht auf ein mit einer Riffelung versehenes Stellrad 11 mit den Drehrichtungen 14 und 15, hier durch einen beidseitigen Pfeil dargestellt, sowie den Kipprichtungen 15, 16. Das Stellrad 11 ist hier in einem Ausschnitt 22 eines nicht dargestellten Mobiltelefons angeordnet. Beispielsweise können durch Drehung in eine Richtung 14, 15 die Ziffern 0, 1,..., 9 angesteuert werden. Drücken des Stellrads 11 in der Figur nach links löst Escape/Zurück aus, während drücken nach rechts OK/Enter auslöst.

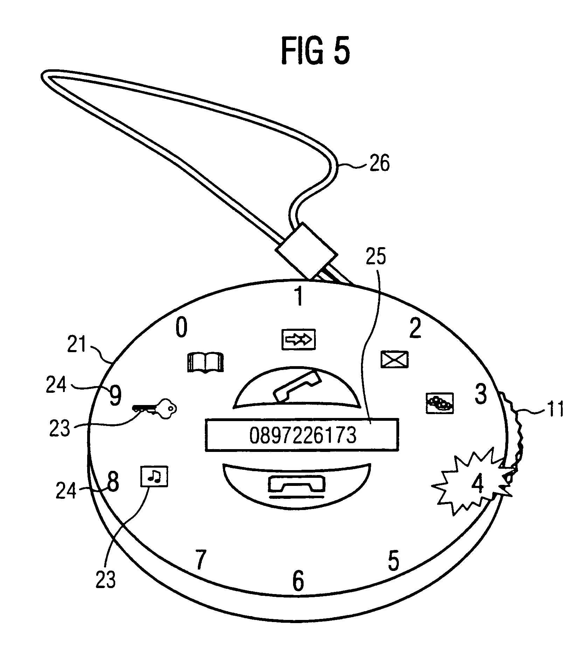

Fig. 5 zeigt eine Ansicht einer ersten Ausführungsform eines Mobiltelefons 21 mit sogenannter "analoger" Selektionsanzeige, wobei das Mobiltelefon eine kreisförmige Form hat. Das Mobiltelefon weist eine kreisförmige Oberfläche auf, die im folgenden als Anzeigefläche bezeichnet wird, auf der Menüsymbole 23 und Ziffern 24 angeordnet sind. Dabei sind sowohl die Menüsymbole als auch die Ziffern 24 jeweils auf einem Kreis angeordnet. Die Ziffern 24 bzw. die Menüsymbole 23 werden bei Anwahl hinterleuchtet, beispielsweise durch entsprechende Leuchtdioden. Die Anwahl erfolgt dabei über das seitlich in dem Mobiltelefon 21 angeordnete Eingabeelement, von dem hier ein Teil des Stellrads 11 herausragt und sichtbar ist. In der Mitte der Anzeigefläche des Mobiltelefons 21 befindet sich ferner eine Anzeige 25, die beispielsweise zur Darstellung der angewählten Ziffernfolge dient. Ferner weist das Mobiltelefon 21 eine als Antenne 26 ausgebildete Tragekordel auf.

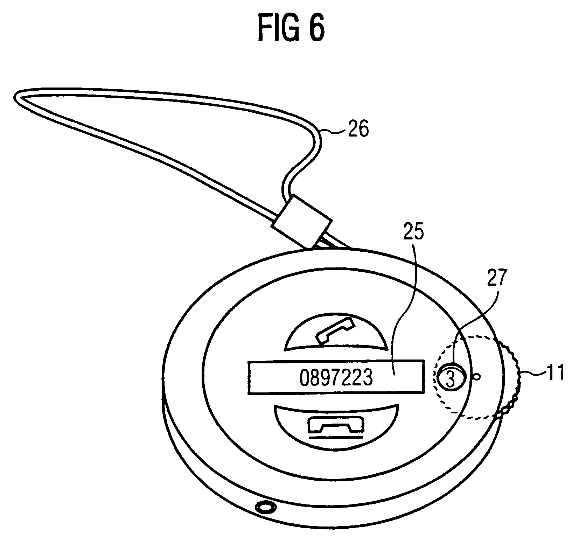

Fig. 6 zeigt eine vereinfachte Version eines Mobiltelefons mit sogenannter "digitaler" Anzeige. Hier ist nur eine Selektionsanzeige 27 auf der Anzeigefläche des Mobiltelefons 21 angeordnet. Durch Drehen und Drücken des Stellrads 11 wird eine Ziffer oder Menü selektiert und in der Anzeige 25 angezeigt.

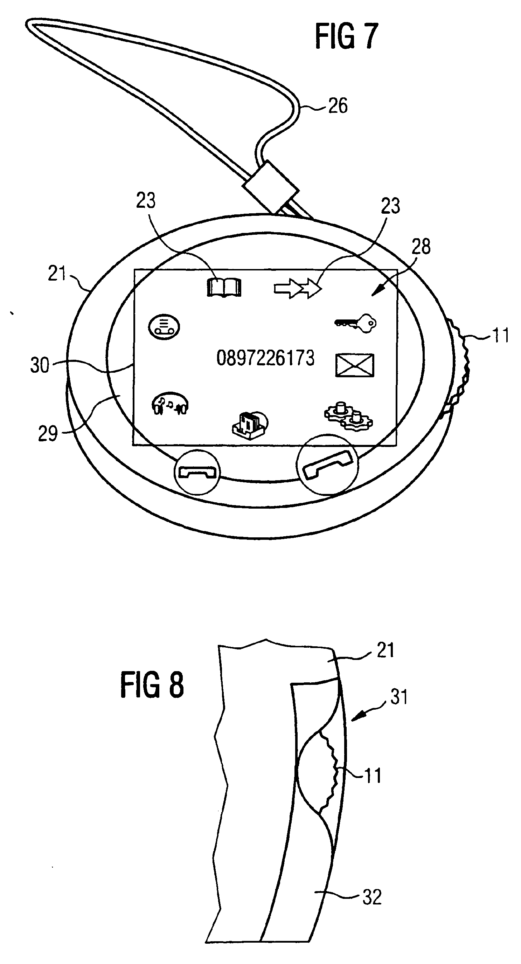

Fig. 7 zeigt eine dritte Ausführungsform eines kreisförmigen Mobiltelefons 21. Hier wird die Anzeigefläche des Mobiltelefons 21 fast vollständig von einer kreisförmigen Scheibe 29, die durch einen Filter gebildet wird, ausgefüllt, hinter der ein Display 30 angeordnet ist. Auf diesem Display werden die Menüsymbole 23 und Ziffern (hier nicht dargestellt) erzeugt. Dabei sind auch hier die Menüsymbole 23 auf einem Kreis angeordnet. Die Selektion eines Menüs wird durch das seitlich angeordnete Stellrad 11 vorgenommen. Dabei kann das Display mehrfarbig sein, um eine bessere Visualisierung zu erzielen. Eine Variante dieser Lösung besteht darin, daß sich hinter dem Filter 29 nur ein kleines Display zur Anzeige der Ziffern befindet und die Menüsymbole 23 direkt auf dem Filter 29 angeordnet sind, wobei sie durch eine Beleuchtungsvorrichtung, beispielsweise Leuchtdioden, separat beleuchtet werden können, um die jeweilige Selektion zu verdeutlichen und anzuzeigen.

Fig. 8 zeigt eine Ausführungsform eines Mobiltelefons 21, bei dem das Stellrad in einer Aussparung 31 des Mobiltelefons 21 angeordnet ist. Ferner ist eine verschiebbare Abdeckung 32 vorhanden. Bei Nichtgebrauch des Mobiltelefons 21 kann die Abdeckung über das versenkt angeordnete Stellrad geschoben werden, so daß das Stellrad 11 geschützt ist. Ferner kann mit der Abdeckung eine Benutzungssperre des Stellrads verbunden sein.

## Patentansprüche

1. Eingabeelement zum Eingeben von Daten, wobei das Eingabeelement zwei Drehfunktionen in einer Drehebene in jeweils entgegengesetzten Richtungen aufweist,
**dadurch gekennzeichnet, daß**
das Eingabeelement (10) ein Stellrad (11) aufweist, welches axial auf einem Lager (20) gelagert ist, so daß ein Kippen des Stellrades (11) aus der Drehebene heraus nach beiden Seiten ermöglicht wird und welches zwei von den Drehfunktionen unabhängige, Tastenfunktionen aufweist, wozu das Stellrad (11) aus der Ebene der Drehbewegung heraus nach jeder Seite durch die Ausübung eines entsprechenden Drucks gekippt werden kann.

2. Eingabeelement nach Anspruch 1, **dadurch gekennzeichnet, daß** das Lager (20) ein Kugelgelenk ist.

3. Eingabeelement nach Anspruch 1 oder 2, **dadurch gekennzeichnet, daß** das Eingabeelement (10) zwei Sensoren (18, 19) zur Bestimmung der Kippbewegung aufweist, die beiderseits des Stellrads (11) innerhalb des Kippbereichs angeordnet sind.

4. Eingabeelement nach einem der Ansprüche 1 bis 3, **dadurch gekennzeichnet , daß** die Drehung des Stellrads (11) rastend oder nicht rastend erfolgt.

5. Eingabeelement nach einem der Ansprüche 1 bis 4, **dadurch gekennzeichnet , daß** die Drehung des Stellrades (11) freilaufend oder mit einem Anschlag versehen ist.

6. Eingabeelement nach einem der vorangegangenen Ansprüche, **dadurch gekennzeichnet, daß** das Eingabeelement (10) einen Sensor (17) zur Bestimmung der Drehbewegung und Richtung aufweist.

7. Eingabevorrichtung mit einem Eingabeelement (11) nach einem der vorangegangenen Ansprüche und einer Anzeigevorrichtung (21) zum Anzeigen von Menüpunkten und/oder Ziffern.

8. Eingabevorrichtung nach Anspruch 7, **dadurch gekennzeichnet, daß** die Anzeigevorrichtung (21) größflächig, vorzugsweise kreisförmig ist.

9. Eingabevorrichtung nach Anspruch 7 oder 8, **dadurch gekennzeichnet, daß** die Menüpunkte und/oder Ziffern im wesentlichen entlang eines Kreises angeordnet sind.

10. Eingabevorrichtung nach einem der Ansprüche 7 bis 9, **dadurch gekennzeichnet, daß** die Anzeige mindestens zwei verschiedene Farben aufweist.

11. Telefon, insbesondere Mobiltelefon (21), mit einer Anzeigevorrichtung nach einem der Ansprüche 7 bis 10.

## Claims

1. Input element for inputting data, the input element having two rotary functions in opposite directions in a rotary plane,
**characterized in that**
the input element (10) has an actuator wheel (11) which is supported axially on a bearing (20) so that tilting of the actuator wheel (11) out of the rotary plane on both sides is made possible, and
which has two key functions which are independent of the rotary functions, for which purpose the actuator wheel (11) can be tilted out of the plane of rotary movement on each side by exerting an appropriate pressure.

2. Input element according to Claim 1, **characterized in that** the bearing (20) is a ball bearing.

3. Input element according to Claim 1 or 2, **characterized in that** the input element (10) has two sensors (18, 19) for determining the tilting movement, which sensors (18, 19) are arranged on each side of the actuator wheel (11) within the tilting range.

4. An input element according to one of claims 1 to 3, **characterized in that** the actuator wheel (11) rotates in a latching or non-latching fashion.

5. Input element according to one of Claims 1 to 4,
**characterized in that** the actuator wheel (11) rotates in a freely running fashion or is provided with a stop.

6. Input element according to one of the preceding claims, **characterized in that** the input element (10) has a sensor (17) for determining the rotary movement and direction.

7. Input device having an input element (11) according to one of the preceding claims, and a display device (21) for displaying menu items and/or numbers.

8. Input device according to Claim 7, **characterized in that** the display device (21) has a large area and is preferably circular.

9. Input device according to Claim 7 or 8, **characterized in that** the menu items and/or numbers are arranged essentially along a circle.

10. Input device according to one of Claims 7 to 9,
**characterized in that** the display has at least two different colours.

11. Telephone, in particular mobile telephone (21), having a display device according to one of Claims 7 to 10.

## Revendications

1. Unité d'entrée pour entrer des données, ladite unité ayant deux fonctionnalités liées à un mouvement rotatif exercé dans le plan de rotation dans deux directions opposées, cette unité d'entrée (10) étant **caractérisée par** une molette (11) montée axialement sur un palier (20) qui permet d'incliner la molette (11) perpendiculairement au plan de rotation vers les deux côtés, de sorte qu'une inclinaison de la molette (11) vers l'extérieur du plan de rotation de chacun des côtés est possible et présentent deux fonctions de touche indépendantes des fonctions de rotation, la molette (11) pouvant être inclinée vers l'extérieur du plan de rotation vers chacun des côtés par l'application d'une pression correspondante.

2. Unité d'entrée selon la revendication 1, **caractérisée en ce que** le palier (20) est un joint à rotule.

3. Unité d'entrée selon les revendications 1 ou 2, **caractérisée en ce que** l'unité d'entrée (10) est dotée de deux capteurs (18, 19) destinés à détecter le mouvement d'inclinaison, qui sont disposés des deux côtés de la molette (11), à l'intérieur de la zone d'inclinaison.

4. Unité d'entrée selon une des revendications 1 à 3, **caractérisée en ce que** le mouvement rotatif de la molette (11) est indexé ou non indexé.

5. Unité d'entrée selon une des revendications 1 à 4, **caractérisée en ce que** le mouvement rotatif de la molette (11) est libre ou limité par une butée.

6. Unité d'entrée selon une des revendications précédentes, **caractérisée en ce que** l'unité d'entrée (10) est équipée d'un capteur (17) pour détecter le mouvement rotatif et sa direction.

7. Dispositif d'entrée comportant une unité d'entrée (11) selon une des revendications précitées ainsi qu'un dispositif d"affichage (21) destiné à afficher des entrées de menu et/ou des chiffres.

8. Dispositif d'entrée selon la revendication 7,
**caractérisé en ce que** le dispositif d'affichage (21) présente une large surface qui, de préférence, est de forme circulaire.

9. Dispositif d'entrée selon les revendications 7 ou 8, **caractérisé en ce que** les entrées de menu et/ou les chiffres sont essentiellement disposés de façon à former un cercle.

10. Dispositif d'entrée selon une des revendications 7 à 9, **caractérisé en ce que** l'affichage comporte au moins deux couleurs différentes.

11. Téléphone, plus particulièrement téléphone mobile (21) comportant un dispositif d'affichage selon une des revendications 7 à 10.
